## Europäisches Patentamt
## European Patent Office
## Office européen des brevets

(19)

(11) Veröffentlichungsnummer: **0 062 112**
**B1**

(12) **EUROPÄISCHE PATENTSCHRIFT**

(45) Veröffentlichungstag der Patentschrift:
04.12.85

(51) Int. Cl.⁴: **F 16 F 9/04,** B 60 G 11/26

(21) Anmeldenummer: **81110419.9**

(22) Anmeldetag: **14.12.81**

(54) **Rollmembran für Luftfedern.**

(30) Priorität: **25.03.81 HU 75281**

(43) Veröffentlichungstag der Anmeldung:
**13.10.82 Patentblatt 82/41**

(45) Bekanntmachung des Hinweises auf die Patenterteilung:
**04.12.85 Patentblatt 85/49**

(84) Benannte Vertragsstaaten:
**AT BE DE FR GB IT LU NL SE**

(56) Entgegenhaltungen:
AT - B - 340 209
CH - A - 335 258
DE - A - 2 023 105
DE - A - 2 030 342
DE - A - 2 310 574
DE - A - 2 905 791
DE - B - 2 759 433
DE - B - 2 836 662
FR - A - 1 229 277

(73) Patentinhaber: **Taurus Gumiipari Vállalat, Kerepesi ut 17, Budapest VIII (HU)**

(72) Erfinder: **Fejérdi, István, Dipl.-Chem., Keleti Károly utca 29, Budapest II (HU)**
Erfinder: **Farkas, Otto, Dipl.-Masch., Törökvész utca 27, Budapest II (HU)**

(74) Vertreter: **Füchsle, Klaus, Dipl.-Ing. et al, Hoffmann . Eitle & Partner Patentanwälte Arabellastrasse 4, D-8000 München 81 (DE)**

EP 0 062 112 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Rollmembran bzw. einen Rollbalg für Luftfedern, gemäß den Merkmalen des Oberbegriffs des Anspruchs 1, insbesondere für bei Lastkraftfahrzeugen, Autobussen, Sattelschleppern und ähnlichen Fahrzeugen zur Aufhängung verwendeten Luftfedern.

Insbesondere bezieht sich die Erfindung einerseits auf die neuartige Gestaltung der Rollmembran, andererseits auf die Gestaltung der Winkelwerte der in der Rollmembran vorhandenen Kordfasern.

Es ist bekannt, daß die Beanspruchung der Rollmembran einer Luftfeder bereits im Laufe der Auffüllung mit Luft anfängt. Die Höhe des im Inneren der Luftfeder sich ausgestaltenden Druckes wird sich demnach ändern, ob eine Aus- oder Einfederung stattfindet. Im Laufe des Gebrauchs wird infolge der Deformation der Membran oder der Hystherese des Gummis ein Teil der Falt- und Deformationsarbeit in Wärme umgewandelt. Aus diesem Standpunkt heraus wird der Wandstärke der Membran große Bedeutung beigemessen, da bei einer dickeren Membranwand die infolge der Falt- und Deformationsarbeit auftretende Wärmebildung höher ist als bei einer dünneren Membranwand.

Ein weiterer Zusammenhang kann zwischen der Längsabmessung bzw. dem Querschnitt und dem Maß der Erwärmung beobachtet werden. Unter gleichen Umständen und bei einem gleichen Innendruck wird sich eine Membran mit einem kleineren Durchmesser und/oder geringerer Länge — d. h. mit einem kleineren Luftraum — stärker erwärmen.

Selbstverständlich wird die Deformation der Luftfedermembranen auch von den Wegverhältnissen bedeutend beeinflußt. Die Membranen sind auf einer Fahrstraße von durchschnittlicher Qualität mehreren Tausend von Ein- und Ausfederungen während einer Stunde ausgesetzt. Die statistischen Prüfungen haben bestätigt, daß bei veränderlichen Weg-, Geschwindigkeits- und Belastungsverhältnissen nach dem Ablauf von 50 000 km die Luftfedermembran $6,5 \times 10^6$ Faltzyklen unterworfen worden ist, d. h., daß die Membran während ihrer gesamten Lebensdauer das Vielfache dieses Wertes ertragen muß. Während des erwähnten Federspiels sind die festigkeitstragenden Kordfasern in der Membranwand einer Zug- und Druckbeanspruchung ausgesetzt. Die Druckbeanspruchung ist aber für die Kordfasern sehr schädlich. Aufgrunddessen muß nach einer Herabsetzung derselben gestrebt werden.

Andererseits ist die Tatsache bekannt, daß im allgemeinen die Fahrzeughersteller neben der Sicherstellung der Federung auch die Forderung stellen, daß die Luftfederung zum Anheben eines entsprechenden Teiles der Aufhängung geeignet ist. Eine weitere Forderung besteht darin — insbesondere, wenn eine leichte, gegenüber Erschütterungen empfindliche Fracht in großen Mengen transportiert wird —, daß in dem Fall, in dem eine vollkommene Belastung des Fahrzeugs praktisch nicht realisiert wird, die eine Achse (aus auf die Schwingungsdämpfung gerichteten Überlegungen) auch während des Betriebes angehoben wird, wodurch auch unter extremen Federungsverhältnissen annähernd gleiche Federungseigenschaften erreicht werden können. Bei zahlreichen Kraftfahrzeugen, Anhängern, Sattelschleppern usw. trat die Verwendung der Luftfedern in den Vordergrund, da auf diese Weise eindeutig bessere Federungscharakteristiken erreicht werden konnten. Gleicherweise wird das Luftfedersystem vorteilhaft bei Silofahrzeugen, Behälterwagen usw. verwendet, da dadurch nicht nur die Qualität der Federung während der Leerfahrten verbessert werden kann, sondern das ganze Fahrzeug geschont wird. Des weiteren wird das Anheben der Räder in einen unbelasteten Zustand ermöglicht.

Bei dem Betrieb der Kraftfahrzeuge kommt ein extremer Federungszustand recht oft vor, der darin besteht, daß der in der Luftfeder herrschende Luftdruck auf einen niedrigeren Wert abfällt. Während des Transports (Schiffstransport, per Bahn) eines Fahrzeugs tritt auch ein Zustand ein, in dem kein Überdruck in der Luftfeder gegeben ist. In diesem Zustand ist aufgrund des Anhebens des Fahrzeuges und der dadurch gegebenen Entlastung der jeweiligen Luftfeder der im Inneren der Membran herrschende Druck niedriger als der atmosphärische Druck, wodurch eine negative Krümmung in der Rollmembran entsteht, die beim Aufstellen des Fahrzeuges auf seine Räder zu schadhaften Deformationen und Einbeulungen führen kann.

Ein ähnlicher kritischer Zustand entsteht bei einem in der Garagenposition vorgenommenen Radwechsel, d. h. bei allen Gelegenheiten bei denen die Karosserie plötzlich angehoben wird, da dadurch in der Membran ein verminderter Überdruck und ein großes Volumen entstehen.

Es kann festgestellt werden, daß das Profil einer üblich ausgestalteten Rollmembran sich in den Extremfällen ändert, bei einer wiederholten Belastung sich ausbeult und leicht zerstört wird.

Um diese Erscheinungen vermeiden zu können, wurden äußere Versteifungen, z. B. die Anwendung eines Metallmantels vorgeschlagen. Die Lösung hatte jedoch nicht zu den gewünschten Resultaten geführt, da der Mantel leicht von der Rollmembran abrutschte und deshalb nicht imstande war, seine Funktion zu erfüllen.

Aus der AT-B-340 209 ist eine Lösung bekannt, bei der zur Verminderung der oben geschilderten schadhaften Erscheinungen unter, zwischen oder über einem oder mehreren, mit ihren übereinander angeordneten Fasersystemen Rhomben bildenden Stoffeinsätzen der Rollmembran, mindestens im Bereich eines Abschnittes der Mantelfläche des zylindrischen Teiles der Membran ein oder mehrere weitere Einsätze vorgesehen ist (sind), der (die) an den erst erwähnten Einsätzen befestigt ist (sind) und dessen (deren) Fasersystem die erwähnten Faserrhomben in Faserdreiecken unterteilt. Diese Lösung (sog. »Membran mit Gürteleinsatz«) ergibt in den gegebenen Abschnitten eine gewisse Steifheit der Membran, die das Maß der Deformation und die schadhaften Einflüsse verringert.

Aus der DE-B-2 759 433 ist eine Rollmembran für eine Luftfeder bekannt, die im eingebauten Zustand die Form eines Doppelkegels annimmt, wobei die Konizität der beiden Stumpfkegel unterschiedlich ist. Dem Dokument ist aber über die Form der Membran im nicht eingebauten Zustand keine Information zu entnehmen. Bei dieser bekannten Lösung gestalten sich die zwei verschiedenen Kegelformen unter dem Einfluß des äußeren Mantels und der beiden Federkolben, die weiterhin sich gemäß dem Momentanwert der Federung mit der relativen Bewegung der Metallteile verändert. In diesem Fall haben die Formen bzw. die Ausgestaltungen der Metallteile und deren Stellungen die ausschlaggebende Rolle. Die Ausgestaltung der Membran ist dabei nebensächlich. Sie hat vermutlich eine zylindrische Form. Demgegenüber hat die Membran gemäß der Erfindung eine Doppelkegelform und funktioniert ohne Außenstützen (auf Metallteile) ausschließlich mit Hilfe der Anordnung der festigkeitstragenden Textileinlagen, d. h., die komplizierten Metallausrüstungen sind überflüssig, und deren scheuernde Wirkungen werden vermieden.

Der Erfindung liegt die Aufgabe zugrunde eine Rollmembran für Luftfedern zu entwickeln, in deren Kordstruktur die Zugbeanspruchung dominiert und die Druckbeanspruchung reduziert wird. Darüber hinaus soll auf der Basis der oben beschriebenen Verstärkungswirkung eine äußerst günstige und entsprechend weiche Federung erreicht werden; weiterhin besteht die Forderung, daß bei einem niedrigen Druckwert eine Beulung der Membran kein Schadhaftwerden hervorruft; der letzterwähnte Umstand verlängert die Lebensdauer der Membran ohne Erfordernis der Verwendung eines separaten äußeren Mantels oder eines zusätzlichen Einsatzes (Gürtels). Die Aufgabe wird bei einer Rollmembran der vorausgesetzten Art dadurch gelöst, daß in einem Zustand ohne Überdruck die Durchmesser des Hohlkörpers der Rollmembran sich entlang der Erzeugenden ändern, und zwar derart, daß von den unteren und oberen Flanschen der Rollmembran ausgehend die Durchmesser in einem unterschiedlichen Maß zunehmend das Profil eines Doppelstumpfkegels bestimmen und daß ferner die Rollmembran mindestens zwei einander kreuzende Fasern enthaltende Einsätze aufweist, bei denen der Wert des Kordwinkels sich entlang der Erzeugenden des Hohlkörperprofils ständig ändert.

Zweckmäßige Ausgestaltungen der erfindungsgemäßen Rollmembran ergeben sich aus den übrigen Ansprüchen.

Die erfindungsgemäße Lösung beruht auf der Erkenntnis, daß durch die Modifizierung des Profils der Rollmembran aufgrund der gegenseitigen Stützwirkung des Doppelkegels und die derart erzeugten Kordwinkel die Membran ausgesteift und gegenüber Deformationen geschützt wird (in vergleichbarer Weise ist eine gerippte Platte steifer als eine plane), wodurch die aus dem Stand der Technik resultierenden Nachteile behoben werden. Die erfindungsgemäße Gestaltung ergibt — mit den bekannten Luftfedermembranen mit diagonaler Querverstärkung verglichen — eine Membran mit wesentlich vorteilhafteren Charakteristiken.

Mit den eine äußere Stützanordnung umfassenden Lösungen verglichen, ist die erfindungsgemäße Lösung ebenfalls eine vorteilhafte Weiterentwicklung; in diesem Fall werden die Luftfedermembranen, die mit den mit der Bandrolle mitvulkanisierten peripheralen und in Richtung der Erzeugenden liegenden Verstärkungseinsätzen versteift sind, weiterentwickelt und deren Federungsparameter verbessert.

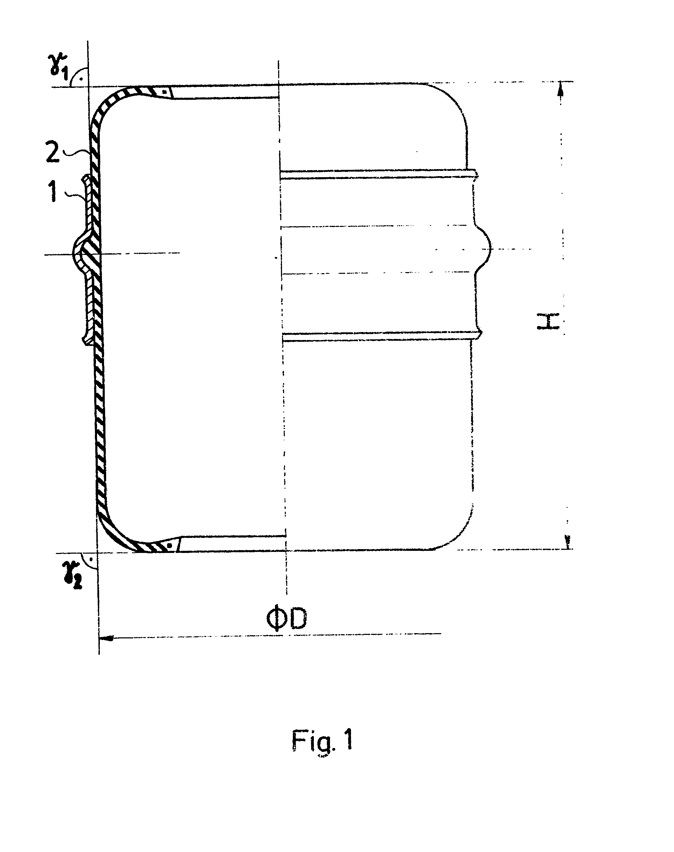

Die Fig. 1 bis 3 stellen die Profile der bisher bekannten und allgemein verwendeten Rollmembranen dar.

Die in Fig. 1 veranschaulichte, an dem zugehörigen Kolben rollende Rollmembran 2 ist dadurch gekennzeichnet, daß sie mit einem Mantel 1 versehen ist. Wie in der Zeichnung dargetellt, kann die Höhe H der Membran deren Durchmesser D überschreiten. Es kann allerdings entgegen der Zeichnung die Höhe H kleiner als der Durchmesser D sein.

Bei dieser Lösung ist die Kordverstärkung aus mindestens zwei, einander kreuzenden Einsätzen gefertigt. Der Durchmesser der Membranen ändert sich während der Federung, und zwar derart, daß der Durchmesser in dem Abschnitt unter dem Mantel 1 konstant bleibt, während in den Abschnitten ohne Verstärkung eine Zunahme beobachten werden kann, wobei der Kordwinkel der Einsätze der vulkanisierten Membran zwischen 40° und 50° liegt.

Das in Fig. 1 dargestellte Membranprofil kann auf einem verhältnismäßig beschränkten Gebiet, nämlich ausschließlich bei Autobussen, verwendet werden. Der Nachteil dieser Lösung besteht darin, daß in dem ausgefederten (unbelasteten) Zustand der Mantel 1 oft von der Rollmembran 2 abrutscht, wodurch sowohl die Membran 2 als auch der Mantel 1 zerstört werden.

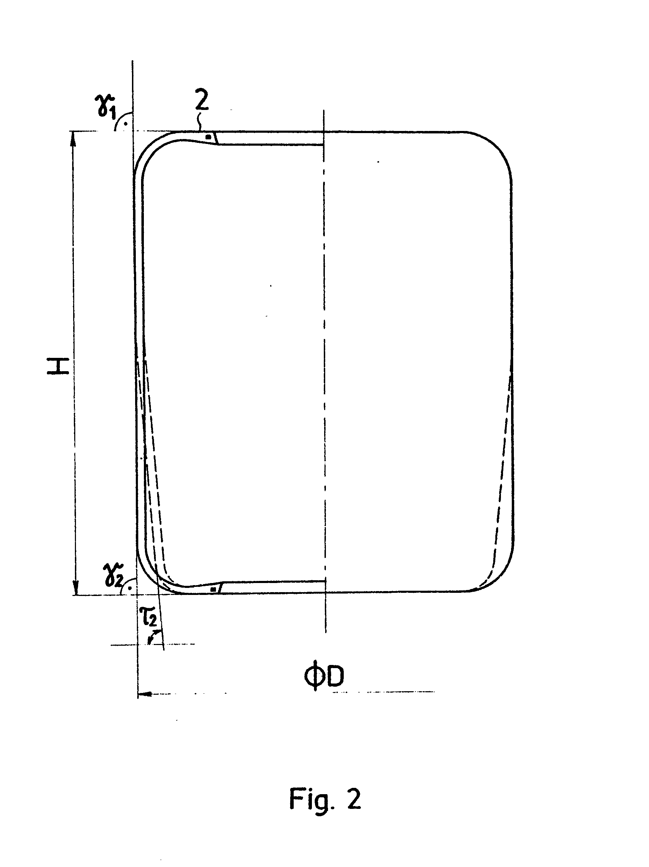

Die in Fig. 2 gezeigte, in den Einsätzen unter einem sog. Gleichgewichtswinkel angeordneten Kordfasern enthaltende, ggf. einseitig konisch ausgestaltete Rollmembran 2 ist dadurch gekennzeichnet, daß die Länge H der zylindrischen (oder einseitig konischen) Membran 2 dem Durchmesser D gleich ist oder diesen überschreitet, d. h., daß $H = 1 - 2\,D$ ist.

Die Winkel des Membranprofils sind wie folgt:

$\gamma_1$ und $\gamma_2 = 90°$ oder
$\gamma_1 = 90°$ und
$\tau_2 = 85 - 75°$

Auch in diesem Fall besteht die verwendete Kordverstärkung aus wenigstens zwei, einander kreuzenden Einsätzen, wobei unter Belastung und Überdruck die Kordfasern mit der Längsachse einen Winkel einschließen, unter dem der Durchmesser sich nur gering verändern kann (Gleichgewichtswinkel).

Diese Gestaltung ist zwar schon viel besser als die in der Fig. 1 veranschaulichte, mit dem Mantel 1 versehene Rollmembran 2, aber auch bei dieser Gestaltung kommt die Verdrückung in einem unbelasteten Zustand zustande.

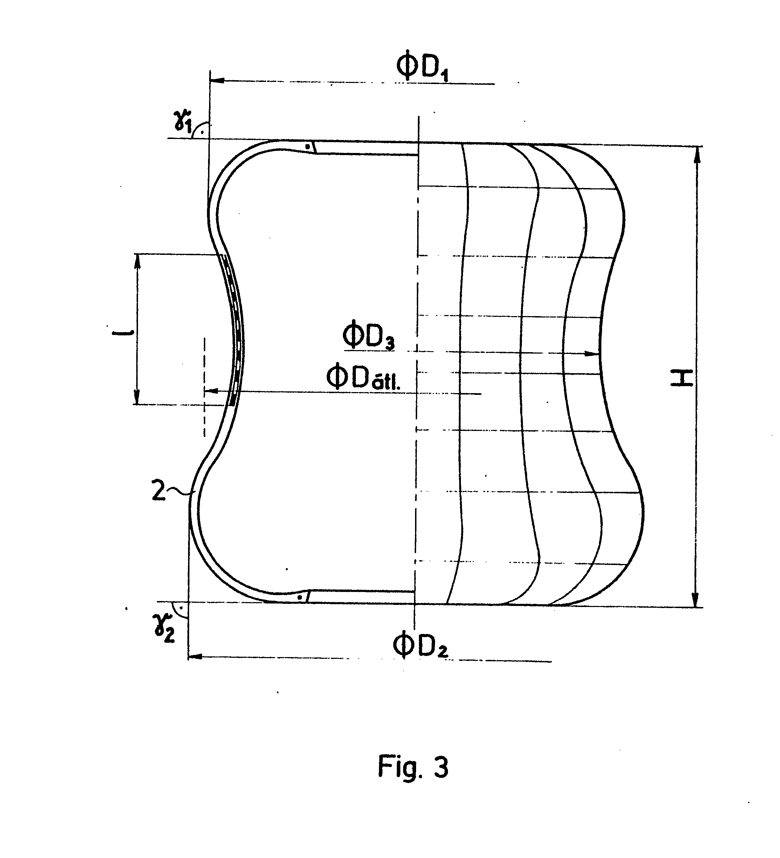

Die Fig. 3 stellt die Lösung nach der bereits zitierten AT-B-340 209 dar; bei dieser Rollmembran 2 beträgt das Verhältnis Höhe (H) und durchschnittlicher Durchmesser

$$D_{\text{durchschnittlich}} H \lesseqgtr D_{\text{durchschnittlich}};$$

$$H/D_{\text{durchschnittlich}} = 0,65 - 2$$

Ferner ergibt sich:

$$\gamma_1 = \gamma_2$$

$$D_1 \neq D_2 \neq D_3; D_1, D_2 > D_3$$

Unter Zuhilfenahme des Versteifungssystems des Abschnitts 1 ist es gelungen, bei dieser Lösung das Beulen zu vermindern; eine vollkommene Beseitigung konnte aber nicht erreicht werden. So weist diese im übrigen recht vorteilhafte Lösung noch immer den Nachteil auf, daß das Einsaugen der Membranwand bei der Ausfederung (in einem unbelasteten Zustand) nicht eliminiert werden konnte; dabei kann die bei den einvulkanisierten Gürtelenden entstehende, die Spannung ansammelnde Linie ein Schadhaftwerden der Membran hervorrufen.

Es ist weiterhin eine Gummimembran-Profilgestaltung bekannt, bei der der Flansch der Membran sich nach außen biegt und mit einer einspannenden Metallstruktur unlösbar verbunden ist. Auch in diesem Fall ist der arbeitende Abschnitt der Membran zylindrisch ausgestaltet. Die bekannten Nachteile konnten auch hier nicht beseitigt werden.

Im Sinne der erfindungsgemäßen Lösung werden die Nachteile der bekannten Gestaltungen dadurch beseitigt, daß eine Membran verwendet wird, die in dem Grundzustand (d. h. ohne Überdruck) durch sich entlang der Erzeugenden des Hohlkörpers ändernden Durchmesser charakterisiert werden kann, wobei die Durchmesser von den unteren bzw. oberen Flanschen der Membran ausgehend und in einem voneinander abweichenden Maß zunehmend das Profil eines doppelten Stumpfkegels bestimmen.

Das Verstärkungssystem der erfindungsgemäßen Rollmembran kann dadurch gekennzeichnet werden, daß es aus mindestens zwei, einander kreuzenden Fasern enthaltenen Einsätzen besteht, bei der der Wert des Kordwinkels (unter dem Kordwinkel wird ein Winkel verstanden, der in einer durch den geprüften Punkt der Membran gelegten zu der Hauptdrehachse der Membran senkrechten Ebene liegt und von der zu dem geprüften Punkt gezogene Tangente und der Kordfaser umschlossen wird, verstanden) sich entlang der Membranerzeugenden ständig ändert, und zwar, von dem größten Durchmesser ausgehend (wo der Kordwinkel 25—40° beträgt), in der einen Richtung bis 40—45°, in der anderen Richtung bis 50—60°.

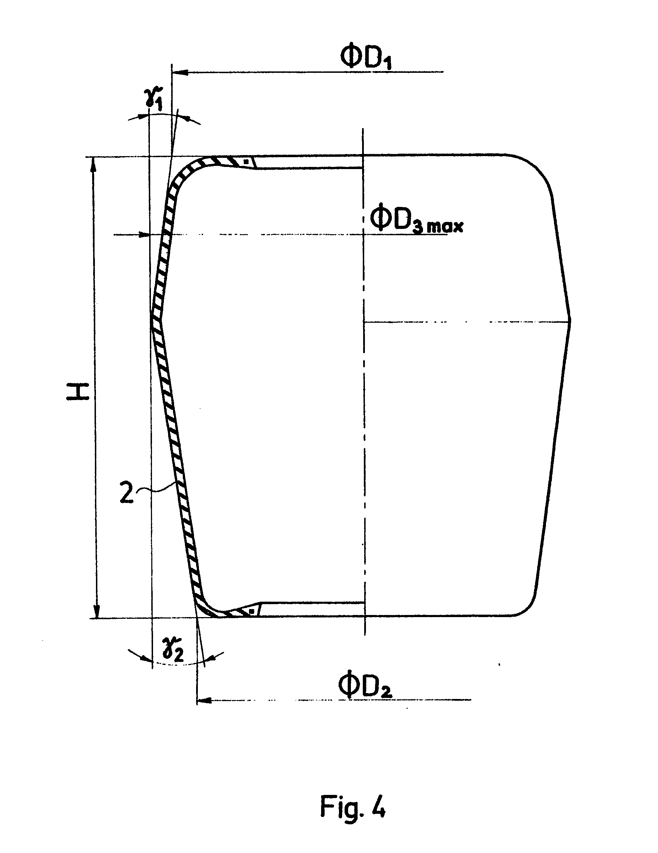

Die erfindungsgemäße Lösung ist näher in der Fig. 4 dargestellt. Diese zeigt die Rollmembran 2 im unbelasteten Zustand, in dem die Durchmesser entlang der Erzeugenden des Hohlkörpers von dem oberen und unteren Flansch der Rollmembran ausgehend, nach der Mitte tendierend, zunehmen, und zwar in unterschiedlichen Massen, bis sie einen gemeinsamen maximalen Durchmesser erreichen. Die Höhe H der erfindungsgemäßen Rollmembran 2 entspricht zweckmäßig etwa dem 0,5—2,5 des Durchmessers, wobei der Durchmesser sich entlang der gesamten Erzeugenden ändert. Zwischen den beiden Flanschen nimmt der Durchmesser den Randwert D max. an. Die Konizität der beiden mit ihrer Basis zusammenfallenden Stumpfkegel ist unterschiedlich. Dies bedeutet, daß der Winkel, der von der zur Längsachse des Hohlkörpers parallelen und die Erzeugende am größten Durchmesser tangierenden Geraden und von der Erzeugenden des Mantels des jeweiligen Stumpfkegels umschlossen ist, bei dem oberen Stumpfkegel $\gamma_1$ und dem unteren Stumpfkegel $\gamma_2$ ist, wobei $\gamma_1 = 1 - 5°$, $\gamma_2 = 2 - 10°$ und $\gamma_2 = 2\,\gamma_1$.

Der Grundwerkstoff der erfindungsgemäßen Rollmembran kann natürlicher oder synthetischer Kautschuk sein. Die Bandrolle wird aus Kunstseide, Polyamid, Glas- bzw. Stahlfaser hergestellt.

Das oben beschriebene Membranprofil und der entlang der Erzeugenden sich ändernde Winkelwert der Verstärkungseinsätze beeinflussen auf eine einfache, jedoch vorteilhafte Weise den Betrieb der Rollmembran. Die Ermüdung der Bandrolle wird vermindert. Gleichzeitig wird die Beständigkeit gegenüber den ungünstigen Einflüssen der extremen Zustände erhöht, wobei alle die erwähnten Vorteile ohne die Anwendung der akzessorischen Einsätze bzw. eines verstärkenden Mantels und ohne die Erhöhung der Wandstärke erreicht werden.

Wenn die erfindungsgemäße Rollmembran unter Druck gesetzt wird und eine Federung stattfindet, nimmt der Durchmesser nur bis zu einem gewissen Maß zu, wobei auf der nicht rollenden Fläche die Zunahme des Durchmessers geringer und in dem ausgefederten Zustand die Position stabiler ist. Schadhafte Verwindungen, Einbeulungen bzw. Deformationen treten nicht auf.

Ein weiterer Vorteil der erfindungsgemäßen Rollmembran liegt darin, daß die schadhafte Druckbeanspruchung bedeutend verringert werden kann, da in erster Linie die Zugbeanspruchung dominiert; gleichzeitig ist die Wandstärke der erfindungsgemäßen Rollmembran (mit den bekannten Lösungen verglichen) geringer, wodurch die von der Falt- und Druckdeformation hervorgerufene Erwärmung und deren schädliche Auswirkungen vermieden werden.

Dadurch, daß entlang der Erzeugenden des Profils der Rollmembran die Durchmesser sich ständig ändern, wird eine äußerst günstige Verstärkung erreicht, da die in den Verstärkungseinsätzen sich ergebenden Kordwinkel sich ebenfalls ändern, und zwar, von dem größten Durchmesser ausgehend, in beiden Richtungen asymmetrisch.

Auf diese Weise kann das Anwendungsgebiet der erfindungsgemäßen Luftfeder bedeutend erweitert werden. Die die erfindungsgemäße Rollmembran enthaltende Luftfeder kann in unterschiedlichen Kraftfahrzeugen, vom Autobus bis zum Sattelschlepper, verwendet werden. Sie sichert eine optimale Federung, Selbstschwingungszahl und einen als Hebel wirkenden Betrieb, ohne daß ein separater Mantel, Gürtel oder ein sonstiges (zusätzliches) Element nötig wäre.

## Patentansprüche

1. Als Doppelkegel ausgestaltete Rollmembran einer Luftfeder, die über mindestens zwei Einsätze mit einander kreuzenden Fasern verfügt, dadurch gekennzeichnet, daß in einem Zustand ohne Überdruck die Durchmesser sich entlang der Erzeugenden ändernd, von den unteren und oberen Wulsten der Membran (2) ausgehend, sich in einem voneinander abweichenden Maß vergrößernd ein Profil des Formats eines doppelten Stumpfkegels definieren und daß sich der Wert des Kordwinkels entlang der Erzeugenden des Membranprofils fortlaufend ändert, wobei sich der Kordwinkel von dem maximalen Durchmesser der Membran in beiden Richtungen vergrößert.

2. Rollmembran nach Anspruch 1, dadurch gekennzeichnet, daß der Kordwinkel am maximalen Durchmesser 25—40° beträgt und von dort in der einen Richtung bis 40—50° und in der anderen Richtung bis 50—60° zunimmt.

3. Rollmembran nach Anspruch 1 oder 2, dadurch gekennzeichnet, daß der Winkel, der von der zu der Längsachse des Hohlkörpers parallel verlaufenden und die Erzeugende am größten Durchmesser tangierenden Geraden und der verlängerten Mantellinie des jeweiligen Kegels umschlossen ist, bei dem oberen Kegel $\gamma_1$ und dem unteren Kegel $\gamma_2$ ist, wobei $\gamma_1 = 1-5°$, und $\gamma_2 = 2-10°$ und $\gamma_2 = 2\gamma_1$.

4. Rollmembran nach einem oder mehreren der Ansprüche 1 bis 3, dadurch gekennzeichnet, daß die Höhe der Membran dem 0,5—2,5-fachen deren Durchmessers entspricht.

## Claims

1. A rolling diaphragm for an air spring constructed as a double cone and providing at least two inserts having mutually crossing fibers, characterised in that in an unpressurised condition the diameters, changing along the generator, proceeding from the lower and upper edge regions of the diaphragm (2), and enlarging to mutually different degrees, define a profile in the form of a doubled truncated cone, and in that the value of the cord angle along the generator of the diaphragm profile changes continuously, the cord angle increasing in both directions from the maximum diameter of the diaphragm.

2. Rolling diaphragm according to claim 1 characterised in that the cord angle at the maximum diameter amounts to 25 to 40° and increases from there in the one direction to 40 to 50° and in the other direction to 50 to 60°.

3. Rolling diaphragm according to claim 1 or 2 characterised in that the angle which is included between the straight line running parallel to the longitudinal axis of the hollow body and tangent to the generator at the largest diameter and the extended surface line of the respective cone is $\gamma_1$ for the upper cone and $\gamma_2$ for the lower cone where $\gamma_1 = 1$ to 5° and $\gamma_2 = 2$ to 10° and $\gamma_2 = 2\gamma_1$.

4. Rolling diaphragm according to one of claims 1 to 3 characterised in that the height of the diaphragm corresponds to 0.5 to 2.5 times its diameter.

## Revendications

1. Diaphragme roulant pour coussin pneumatique, réalisé avec la forme d'une cône double et comportant au moins deux éléments rapportés munis de fibres croisées, caractérisé en ce que, dans un état sans surpression, les diamètres, qui varient le long de la génératrice, s'étendent à partir de bourrelets supérieur et inférieur du diaphragme (2) et augmentent à des degrés réciproquement différents, définissant un profil possédant le format d'un tronc de cône double, et que la valeur de l'angle de la corde varie de façon continue le long de la génératrice du profil du diaphragme, l'angle de la corde augmentant dans les deux directions à partir de la zone de diamètre maximum du diaphragme.

2. Diaphragme roulant selon la revendication 1, caractérisé en ce que l'angle de la corde est égal à 25—40°, dans la zone de diamètre maximum, et, à partir de là, augmente jusqu'à la valeur de 40—50° dans une direction et jusqu'à la valeur de 50—60° dans l'autre direction.

3. Diaphragme roulant selon la revendication 1 ou 2, caractérisé en ce que l'angle qui est délimité par la droite, parallèle à l'axe longitudinal du corps creux et tangente à la génératrice au niveau de la zone de diamètre maximum, et par la ligne génératrice prolongée du cône respectif est $\gamma_1$ pour le cône supérieur et $\gamma_2$ pour le cône supérieur avec $\gamma_1 = 1-5°$, $\gamma_2 = 2-10°$ et $\gamma_2 = 2\gamma_1$.

4. Diaphragme roulant selon une ou plusieurs des revendications 1 à 3, caractérisé en ce que la hauteur du diaphragme correspond à une valeur comprise entre 0,5 et 2,5 fois son diamètre.

Fig. 1

Fig. 2

9

Fig. 3

Fig. 4